# FASCICULE DE BREVET EUROPEEN

(11) **EP 2 417 198 B1**
(45) Date de publication et mention de la délivrance du brevet: **12.06.2019**
(21) Numéro de dépôt: 10713196.3
(22) Date de dépôt: 08.04.2010
(51) Int. Cl.: C08L 77/00, C08K 5/435, C08L 61/04, C08L 61/06

(54) **MATERIAU POLYAMIDE A PROPRIETES BARRIERES AUX FLUIDES ELEVEES**
POLYAMIDMATERIAL MIT HOHEN FLUIDBARRIEREEIGENSCHAFTEN
POLYAMIDE MATERIAL HAVING HIGH FLUID BARRIER PROPERTIES

(30) Priorité: 10.04.2009 FR 0952395
(43) Date de publication de la demande: 15.02.2012
(73) Titulaire: Rhodia Opérations, 93306 Aubervilliers (FR)
(72) Inventeur: VERGELATI, Caroll, F-38118 Sainte Baudille de la Tour (FR); ANDRES, Olivier, F-69780 Mions (FR); ODONI, Ludovic, F-69140 Rillieux la pape (FR); LONG, Didier, F-69110 Sainte Foy Les Lyon (FR); SOTTA, Paul, F-69002 Lyon (FR)
(74) Mandataire: Schuck, Alexander
(86) Numéro de dépôt international: PCT/EP2010/054633
(87) Numéro de publication internationale: WO 2010/115951

(56) Documents cités:
- WO-A1-2009/037276
- FR-A1- 2 876 109
- US-A- 4 981 890
- US-A- 5 264 474
- US-A1- 2002 147 272
- US-A1- 2005 069 662
- US-A1- 2006 183 835
- US-A1- 2008 314 471

## Description

La présente invention concerne des matériaux polyamides à propriétés barrières aux fluides, gaz et liquides, élevées. Ces matériaux peuvent notamment être utilisés pour la fabrication d'articles destinés à contenir ou à transporter un fluide tel que notamment des tubes, conduites ou réservoirs.

### ART ANTERIEUR

Il est connu de l'art antérieur d'utiliser des matériaux thermoplastiques pour la fabrication d'articles mono- ou multicouches destinés à contenir ou à transporter un fluide tel que par exemple des tubes, conduites ou réservoirs.

Toutefois, il est souvent nécessaire de procéder à des améliorations de ces matériaux pour leur conférer des propriétés barrières aux gaz ou aux liquides satisfaisantes.

US2005069662 concerne des articles moulés pour le transport ou le stockage de carburants fabriqués à partir d'une composition de résine polyamide comprenant: (a) 100 parties en poids d'un composé contenant un polyamide, (b) 5 à 50 parties en poids de résine novolaque phénolique, et éventuellement (c) un copolymère éthylène/alpha-oléfine comme modificateur d'impact, où le modificateur d'impact est présent dans un maximum de 40 pour cent en poids, par rapport au poids total de la composition.

WO2009/037276 concerne l'utilisation d'une résine novolaque pour augmenter la fluidité à l'état fondu d'une composition polyamide. WO2009/037276 ne décrit pas les propriétés barrières de ladite composition polyamide comprenant de 1 à 15 % en poids de résine novolaque, par rapport au poids total de la composition.

Il est par exemple connu d'utiliser des tubes ou réservoirs multicouches, notamment tricouches ; chaque couche pouvant être constituée de matériaux différents pour conférer à l'ensemble les propriétés barrières et mécaniques requises selon les applications. On peut notamment citer les articles multicouches polyéthylène/copolymère éthylène-alcool vinylique/polyéthylène, entre chaque couche une couche de compatibilisation étant utilisée. Toutefois, de tels articles, notamment des tubes, sont coûteux à produire, et la transformation de l'EVOH entraîne une nécessité de nettoyage de l'extrudeuse, ce qui tend à diminuer la productivité de la fabrication de ces articles. Par ailleurs, des problèmes de délaminations peuvent survenir entre les matériaux incompatibles des différentes couches.

FR2876109 concerne des compositions comprenant, en poids, le total étant 100%: 50 à 100% d'au moins un polyamide résultant de l'enchaînement d'une diamine ayant de 6 à 10 atomes de carbone, d'un diacide ayant de 10 à 12 atomes de carbone et éventuellement d'au moins un monomère choisi parmi les lactames, les alpha-oméga aminoacides carboxyliques, les diamines et les diacides; 0 à 40% d'un plastifiant, 0 à 50% d'un modifiant choc;- 0 à 50% d'un polyamide A2. FR2876109 concerne aussi des structures comprenant une couche constituée de la composition ci-dessus, cette structure étant utile pour faire des dispositifs de stockage ou de transfert de fluides en particulier dans les automobiles et les poids lourds.

US2008314471 concerne un tuyau souple multi-couche pour transporter un fluide, tel que le pétrole ou de gaz, comprenant au moins une couche barrière de polyamide-12. Cette couche barrière de polyamide-12 peut contenir des additifs classiques utilisés lors de la préparation des compositions de moulage de polyamide, tel que des plastifiants.

Il est aussi connu d'utiliser pour la diminution de la perméabilité des matrices plastiques, notamment des matrices polyamides, des nanocharges lamellaires.

Une telle diminution de perméabilité est attribuée à un effet de « tortuosité » provoquée par ces nanocharges. Les nanocharges lamellaires les plus explorées aujourd'hui sont des argiles de type smectites, principalement la montmorillonite. Toutefois, il est difficile de mettre en oeuvre ces produits dans la mesure où il est nécessaire de les exfolier dans la matrice notamment en utilisant des agents d'intercalations pour obtenir des lamelles individuelles de haut facteur de forme.

Ainsi, jusqu'à maintenant, il a été proposé dans l'art antérieur des solutions complexes, difficiles à mettre en oeuvre et coûteuses pour augmenter les propriétés barrières des matériaux plastiques ; qui plus est souvent au regard des autres propriétés des matériaux plastiques tel que notamment les propriétés mécaniques.

Il est ainsi souhaitable de mettre au point des matériaux polyamides qui permettent d'obtenir des niveaux d'imperméabilité efficaces, tout en évitant les inconvénients mentionnés précédemment.

### INVENTION

La demanderesse a mis en évidence de manière tout à fait surprenante que l'utilisation dans une matrice polyamide d'une résine novolaque et d'un composé sulfonamide permettait notamment d'obtenir une composition apte à la fabrication d'articles mono- ou multicouches présentant un excellent niveau d'imperméabilités aux gaz et aux liquides, de manière simple et sans altérer négativement les autres propriétés desdits matériaux. La solution de l'invention permet non seulement d'éviter les inconvénients connus de l'art antérieur, mais également d'obtenir des propriétés barrières aux fluides excellentes ; bien supérieures aux systèmes utilisés commercialement. Les matériaux polyamides de l'invention présentent également de bonnes propriétés mécaniques, tel que par exemple un bon compromis module/choc, et/ou une tenue thermique permettant sa manipulation et son utilisation à de hautes températures.

L'invention concerne ainsi une composition polyamide ayant notamment de bonnes propriétés barrières aux fluides comprenant au moins une matrice polyamide, une résine novolaque et un composé portant au moins une fonction sulfonamide, ledit composé portant au moins une fonction sulfonamide étant présent en une teneur allant de 1 à 5 % en poids par rapport au poids total de la composition.

L'invention concerne également l'utilisation d'une résine novolaque et d'un composé portant au moins une fonction sulfonamide pour la fabrication d'une composition polyamide ayant de bonnes propriétés barrières aux fluides.

On entend par compositions ou matériaux à propriétés barrières élevées aux fluides, une composition ou matériau qui présente une perméabilité réduite vis-à-vis d'un fluide. Selon la présente invention, le fluide peut être un gaz ou un liquide. Comme gaz, on peut citer notamment l'oxygène, le dioxyde de carbone, les hydrocarbures légers, tels que l'éthane, le propane, l'éthylène et le propylène, et la vapeur d'eau. Comme liquides, on peut citer les solvants apolaires, notamment les solvants représentatifs des essences tels que le toluène, l'isooctane et/ou les solvants polaires tels que l'eau et les alcools, les réfrigérants. Il est à noter que les liquides peuvent présenter des viscosités variables, tel que notamment les liquides de hautes viscosité s'apparentant aux gels ou crèmes.

Comme polyamide selon l'invention, on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères. Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Selon un mode de réalisation préférentiel de l'invention, la matrice polyamide comprend au moins un polyamide choisi dans le groupe comprenant le polyamide 6, le polyamide 66, le polyamide 10, le polyamide 11, le polyamide 12, le polymétaxylylènediamine (MXD6), les mélanges et copolymères à base de ces polyamides.

Le polyamide est préférentiellement choisi dans le groupe comprenant les polyamides obtenus par polycondensation d'un diacide carboxylique linéaire avec une diamine linéaire ou cyclique comme le PA 6.6, PA 6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection, bien que l'on puisse utiliser aussi des polyamides de plus faibles viscosités.

La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 30 à 95 % en poids de polyamide, préférentiellement de 40 à 80 % en poids, par rapport au poids total de la composition.

Les résines novolaques sont généralement des produits de condensation de composés phénoliques avec des aldéhydes ou cétones. Ces réactions de condensation sont généralement catalysées par un acide ou une base.

Le polyamide selon l'invention peut comprendre une ou plusieurs types de résine novolaque différentes.

Les résine novolaques présentent généralement un degré de condensation compris entre 2 et 15.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glycoxal, et le furfural.

Comme cétone, on peut utiliser l'acétone, la méthyle éthyle cétone ou l'acétophénone.

Selon un mode de réalisation particulier de l'invention, la résine novolaque est un produit de condensation du phénol et du formaldéhyde.

Les résines novolaques utilisées ont avantageusement un poids moléculaire supérieur compris entre 500 et 3000 g/mol, de préférence entre 800 et 2000 g/mol.

Comme résine novolaque commerciale, on peut citer notamment les produits commerciaux Durez®, Vulkadur® ou Rhenosin®.

La composition selon l'invention peut comprendre entre 0,1 à 20 % en poids de résine novolaque, notamment de 1 à 15 % en poids, particulièrement de 5 à 10 % en poids, ou les proportions comprises entre ces valeurs, par rapport au poids total de la composition.

Les composés portant au moins une fonction sulfonamide sont générallement connus pour leur effet plastifiant sur le polyamide.

La composition polyamide comprend un ou plusieurs composés portant au moins une fonction sulfonamide.

Le composé portant au moins une fonction sulfonamide peut notamment comprendre une ou deux fonctions sulfonamides.

Le composé portant une fonction sulfonamide peut notamment être représenté par la formule générale (I) 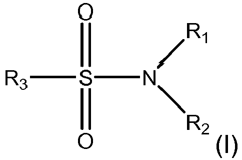 dans laquelle R₁ et R₂ sont indépendamment l'un de l'autre un atome d'hydrogène ou une chaine hydrocarbonée comprenant de 1 à 20 atomes de carbone comprenant éventuellement des hétéroatomes, et R₃ correspondant à une chaine hydrocarbonée comprenant de 1 à 20 atomes de carbone comprenant éventuellement des hétéroatomes.

Le composé portant une fonction sulfonamide est notamment un benzène sulfonamide dans lequel le groupe R3 est un benzène éventuellement substitué.

On entend par chaine hydrocarbonée pouvant comprendre des hétéroatomes au sens de l'invention une chaine linéaire ou branchée cyclique ou non cyclique saturée ou insaturée.

Les fonctions R₁ et R₂ et R₃, indépendamment les uns des autres peuvent correspondre à un alkyle linéaire ou non comprenant de 1 à 20 atomes de carbone, un groupement cyclique saturé ou non comprenant de 3 à 6 atomes de carbone éventuellement substitué, un alkylallyl ou un allylalkyle. On peut citer comme radicaux les groupes méthyles, éthyles, propyles, butyles, hexyles, tertio-butyles, dodécyles et octadécyles.

Le composé sulfonamide de l'invention peut notamment être un bisulfonamide. Dans ce cas, le composé R₁ ou R₂ porte une fonction sulfonamide.

A titre d'exemple, le composé sulfonamide de l'invention de type bisulfonamide peut être représenté par la formule (II) : 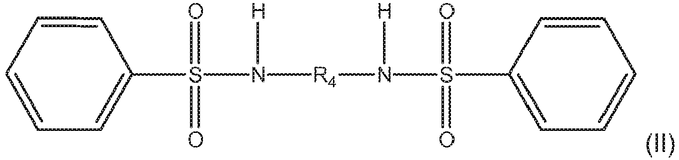 dans laquelle R₄ est un groupe divalent comprenant de 1 à 20 atomes de carbone comprenant éventuellement des hétéroatomes. Ce groupe divalent peut être une chaine linéaire ou branchée cyclique ou non cyclique saturée ou insaturée. On peut notamment citer les groupes éthylène, butylène, n-butylène, triméthylène, octylène, decylène, n-decylène et xylylène.

Les composés de formule (I) préférés sont par exemple choisis dans le groupe comprenant : le Benzenesulfonamide (BSA), le *N,N*-Dimethylbenzenesulfonamide (DMBSA), le *N*-Methylbenzenesulfonamide (MBSA), le *N-*(Ethyl)benzenesulfonamide (EBSA), le *N*-(*n*-Butyl)benzenesulfonamide (BBSA), le *N*-(*n*-Dodecyl)benzenesulfonamide (DoBSA), le *N-*(*-tert-*Dodecyl)benzenesulfonamide (TDoBSA), le (*N*-(*n*-Octadecyl)benzenesulfonamide (OdBSA) et le *N*-(*n*-Butyl)*N*-(*n*-Dodecyl)benzenesulfonamide (BDBSA).

Les composés de formule (II) préférés sont par exemple choisis dans le groupe comprenant : le *N*,*N*'-éthylène-bis(benzènesulfonamide) (bisEBSA), le *N,N'-*n-butylène-bis(benzènesulfonamide) (bisBBSA), le *N*,*N*'-n-hexylène-bis(benzènesulfonamide) (bisHBSA), le *N*,*N*'-trimethylhexylène-bis(benzènesulfonamide) (bisTMHBSA), le *N*,*N*'-n-octylène-bis(benzènesulfonamide) (bisOBSA), le *N*,*N*'-n-decylène-bis(benzènesulfonamide) (bisDBSA), le *N*,*N*'-*n*-*dodecylène*-bis(benzènesulfonamide) (bisDoBSA) et le *N,N'-*1,3-xylylène-bis(benzènesulfonamide) (bisXBSA).

La composition selon l'invention comprend entre 1 et 5 % en poids de composé sulfonamide, par exemple de formule (I) ou de formule (II), particulièrement de 2 à 3 % en poids, ou les proportions comprises entre ces valeurs, par rapport au poids total de la composition.

On préfère particulièrement les compositions polyamides comprenant :
- de 30 à 90 % en poids de polyamide,
- de 1 à 15 % en poids de résine novolaque,
- de 1 à 5 % en poids de composé de formule (I) ou (II), et
- éventuellement des charges de renfort ou de remplissage, et/ou des agents modificateurs de la résistance aux chocs, et
- éventuellement divers additifs ;
les pourcentage en poids sont exprimés par rapport au poids total de la composition.

Le matériau ou composition de l'invention peut également comprendre d'autres composés ou additifs généralement utilisés dans des compositions à base de matrice plastique, tel que par exemple : charges de renfort ou de remplissage, des stabilisants thermiques, des nucléants, des plastifiants, des ignifugeants, des antioxydants, des anti-UV, des colorants, des azurants optiques, des lubrifiants, des agents anti-collage (anti-blocking), des agents matifiants tel que l'oxyde de titane, des agents de mise en oeuvre, des élastomères, des agents d'adhésion, des agents dispersants, des pigments, des agents modifiants la résistance aux chocs, des capteurs ou absorbeurs d'oxygène actifs, et/ou des catalyseurs.

La composition de l'invention peut notamment comprendre des charges de renfort ou de remplissage choisi dans le groupe comprenant les charges fibreuses telles que les fibres de verre, les fibres d'aramides et les fibres de carbone ; ou des charges minérales, telles que les argiles alumino-silicates, les kaolin, les wollastonites, les talcs, les carbonates de calcium, les fluoro-micas, les phosphates de calcium et dérivés. La concentration pondérale des charges de renfort ou de remplissage est comprise avantageusement entre 1 % et 50 % en poids par rapport au poids total de la composition, de préférence entre 15 et 50 %.

Il n'y a pas de limitation aux types d'agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Les matériaux et compositions de l'invention sont généralement obtenus par mélange des différents constituants a chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. La résine novolaque et le composé sulfonamide peuvent être ajoutés à n'importe quel moment du processus de fabrication du matériau plastique, notamment par mélange a chaud ou a froid avec la matrice plastique.

L'addition des composés et des additifs, comme la résine novolaque, peut être réalisée par ajout de ces composés dans la matrice plastique fondue sous forme pure ou sous forme de mélange concentré dans une matrice telle que par exemple une matrice plastique.

Les granulés obtenus sont alors utilisés comme matière première pour alimenter les procédés de fabrication d'articles tels que les procédés d'injection, d'extrusion, d'extrusion-soufflage.

L'invention concerne également des articles obtenus par mise en forme de la composition de l'invention, par toute technique de transformation plastique, comme par exemple par extrusion, tel que par exemple extrusion de feuilles et films ou extrusion soufflage ; par moulage tel que par exemple moulage par compression, moulage par thermoformage ou par rotomoulage ; par injection tel que par exemple par moulage par injection ou par injection soufflage.

L'invention concerne tout particulièrement des articles du type de ceux contenant ou transportant un fluide, comprenant au moins une partie à base d'une composition telle que décrite précédemment. Ce sont donc généralement des corps creux ou des films et articles d'emballages. Ces articles sont notamment choisi dans le groupe comprenant : les réservoirs, les containers, les cuves, les bouteilles, les boites, les tubes, les tuyaux, les conduites, les éléments de pompes, ou dérivés.

La composition ou matériau selon la présente invention peut être déposé ou associé avec un autre substrat, tel que des matériaux plastiques pour la fabrication d'articles composites, notamment multicouches.

Le terme et/ou inclut les significations et, ou, ainsi que toutes les autres combinaisons possibles des éléments connectés à ce terme. D'autres détails ou avantages de l'invention apparaîtront plus clairement au vu des exemples donnés ci-dessous uniquement à titre indicatif.

### PARTIE EXPERIMENTALE

### Exemple 1 : Préparation des compositions et articles

Des compositions à base de polyamide (PA 66 27AD1 de la société Rhodia, ayant un IV de 140 ml/g selon la norme ISO 307) sont obtenues par extrusion sur une extrudeuse bi-vis co-rotative de type Leistritz LSM 30/34, en ajoutant des quantités variables de BBSA (fournisseur Aldrich) et de résine Novolaque (Rhenosin PR95 distribuée par la société Lanxess).

Les caractéristiques de la mise en oeuvre sont les suivantes :
Extrudeuse bi-vis co-rotative Leistritz LSM 30/34, avec
- un profil de température : 250 - 265 - 260 - 269 - 272 - 270 - 270 - 271 - 270
- 275°C
- vitesse de vis (rpm): 250
- force moteur (N.m) : 12
- pression : 20 bar

Des éprouvettes multifonctions et des plaques sont réalisées par moulage par injection de la manière suivante : Presse à injecter de type Billion 140T, vis de 45 mm de diamètre et 900 mm de longueur
T (°C) fourreau: 275 (éprouvettes), 280 (plaques)
T (°C) moule : 80 (pour éprouvettes et plaques)
Vitesse d'injection (m/s) : 25 (éprouvettes), 170 (plaques)
Pression d'injection (bar) : 44 (éprouvettes), 1480 (plaques)
Pression de maintien (bar) : 40 (éprouvettes), 300 (plaques)
Contre pression (bar) : 5 (éprouvettes), 50 (plaques)
Vitesse de vis (rpm) : 150 (éprouvettes), 200 (plaques)

Des films des différentes compositions sont directement mis en oeuvre en sortie d'extrudeuse. Une filière spéciale, appelée filière plate, est adaptée sur le convergeant. Celle-ci permet de mettre la matière extrudée sous la forme d'une nappe de 300 mm de largeur et de la dizaine de microns à 1 mm d'épaisseur, épaisseur réglable manuellement sur toute la largeur de la filière à l'aide de vis.

Le bac de refroidissement habituellement utilisé lors d'une extrusion « classique » est remplacé par la filmeuse composée de :
- deux Chill-Roll : rouleaux régulés en température qui permettent le refroidissement plus ou moins rapide du film
- six rouleaux « supports » qui guident simplement le film
- un double rouleau d'entrainement dont on peut régler la tension et la vitesse
- un rouleau enrouleur dont on peut régler le couple et sur lequel est stocké le produit fini
- une arrivée d'air comprimé en sortie de filière plate pour contrôler le refroidissement du film

### Exemple 2 : Mesure des propriétés

Les propriétés de variabilité dimensionnelle des différentes compositions ont été mesurées sur plaques. Les propriétés mécaniques des différentes compositions ont été mesurées sur éprouvettes multifonctions. Les propriétés barrières à la diffusion d'espèces des différentes compositions ont été mesurées sur films.

Les mesures de variabilité dimensionnelle sont réalisées pour l'ensemble des compositions à partir de plaques rectangulaires de dimensions 100 x 100 x 2,3 mm³. Il s'agit de déterminer l'évolution moyenne des dimensions de la plaque dans le sens parallèle au flux matière et de le sens perpendiculaire au flux matière entre un état 'sec' (Direct After Moulding) et un état d'équilibre correspondant à un stockage sous conditionnement HR50 (degré d'hygrométrie de 50%) à une température de 23°C.

Pour l'ensemble des compositions, les mesures de traction, Module d'Young, Contrainte Seuil et Déformation, sont réalisées selon la norme ISO 527.

Les tests de perméabilité sont élaborés afin d'évaluer la capacité des différentes compositions à empêcher la diffusion de solvants ou de mélange de solvants. Le principe consiste à déposer un carré de film de 50^{∗}50^{∗}0,15 mm³ sur une cellule contenant une certaine quantité de solvant (de l'éthanol pur dans le cas présent). Le film vient fermer la cellule après serrage de quatre vis. Une pesée de la cellule est réalisée à intervalles de temps réguliers pour suivre l'évolution de la perte de masse. La mesure peut être réalisée sous hotte à température et HR ambiantes, ou sous étuve à température et HR contrôlées : 40°C et HR0 dans le cas présent. La valeur de la pente de la droite obtenue en suivant l'évolution de la perte de masse en fonction du temps est celle du coefficient de diffusion intrinsèque de la molécule étudiée dans la composition considérée, dans les conditions de température et d'hygrométrie ré-définies.

La comparaison en termes de propriétés de stabilité dimensionnelle (variabilité dimensionnelle sens parallèle (//) et perpendiculaire (┴) après conditionnement HR50 - 23°C), propriétés mécaniques en traction (Module d'Young) et propriétés barrières (coefficient de diffusion de l'Ethanol à 40°C et HR0) des compostions pré-détaillées est reportée dans le tableau 1 suivant :

Les compositions obtenues sont les suivantes :
C1 : Polyamide 6,6 témoin (non additivé)
1 : Polyamide 6,6 additivé par 6% en poids d'une résine Phénol-Formaldéhyde (Novolac) classique (Rhenosin PR95) et 2% en poids de BBSA
C2 : Polyamide 6,6 additivé par 6% en poids d'une résine Phénol-Formaldéhyde (Novolac) classique (Rhenosin PR95)
C3 : Polyamide 6,6 additivé par 2% en poids de BBSA

**Tableau 1**

| | **Stabilité Dimensionnelle** | | | | **Traction** | | **Propriétés Barrières** | |
|---|---|---|---|---|---|---|---|---|
| | ΔL // (mm) | Gain (+) Perte (%) | ΔL ┴ (mm) | Gain (+) Perte (%) | M. Young (MPa) | Gain (+) Perte (-) (%) | Coeff. Diffusion Ethanol (g/m².j) | Gain (+) Perte (%) |
| **C1** | 0,339 | ------- | 0,308 | ------- | 2497 | ------- | 108 | ------- |
| **1** | 0,181 | +46,6 | 0,169 | +45,1 | 2854 | +14,3 | 56 | +48,1 |
| **C2** | 0,145 | +55,7 | 0,113 | +63,3 | 2685 | +7,5 | 84 | +22,2 |
| **C3** | 0,345 | -1,8 | 0,338 | -9,7 | 2494 | -0,1 | 128 | -18,5 |

On observe ainsi que la composition 1 de l'invention présente de bien meilleures propriétés barrières que les compositions de l'art antérieur tout en maintenant un très bon compromis de propriétés mécaniques et de stabilités dimensionnelles liées à la faible reprise en eau.

## Revendications

1. Composition polyamide, ayant notamment de bonnes propriétés barrières aux fluides, comprenant au moins une matrice polyamide, une résine novolaque et un composé portant au moins une fonction sulfonamide, ledit composé portant au moins une fonction sulfonamide étant présent en une teneur allant de 1 à 5 % en poids par rapport au poids total de la composition.

2. Composition selon la revendication 1, **caractérisée en ce que** la matrice polyamide comprend au moins un polyamide choisi dans le groupe comprenant le polyamide 6, le polyamide 66, le polyamide 10, le polyamide 11, le polyamide 12, le MXD6, les mélanges et copolymères à base de ces polyamides.

3. Composition selon la revendication 1 ou 2, **caractérisée en ce que** la composition comprend de 30 à 95 % en poids de polyamide, par rapport au poids total de la composition.

4. Composition selon l'une quelconque des revendications 1 à 3, **caractérisée en ce que** la résine novolaque est un produit de condensation du phénol et du formaldéhyde.

5. Composition selon l'une quelconque des revendications 1 à 4, **caractérisée en ce que** la composition polyamide comprend entre 0,1 et 20 % en poids de résine novolaque, par rapport au poids total de la composition.

6. Composition selon l'une quelconque des revendications 1 à 5, **caractérisée en ce que** le composé portant au moins une fonction sulfonamide comprend une ou deux fonctions sulfonamides.

7. Composition selon l'une quelconque des revendications 1 à 6, **caractérisée en ce que** composé portant une fonction sulfonamide est représenté par la formule générale (I) 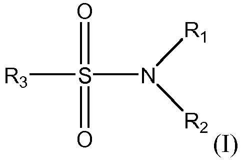 dans laquelle R₁ et R₂ sont indépendamment l'un de l'autre un atome d'hydrogène ou une chaine hydrocarbonée comprenant de 1 à 20 atomes de carbone comprenant éventuellement des hétéroatomes, et R₃ correspondant à une chaine hydrocarbonée comprenant de 1 à 20 atomes de carbone comprenant éventuellement des hétéroatomes.

8. Composition selon la revendication 7, **caractérisée en ce que** les fonctions R₁ et R₂ et R₃, indépendamment les uns des autres, correspondent à un alkyle linéaire ou non comprenant de 1 à 20 atomes de carbone, un groupement cyclique saturé ou non comprenant de 3 à 6 atomes de carbone éventuellement substitué, un alkylallyl ou un allylalkyle.

9. Composition selon l'une quelconque des revendications 1 à 6, **caractérisée en ce que** le composé sulfonamide est représenté par la formule (II) : 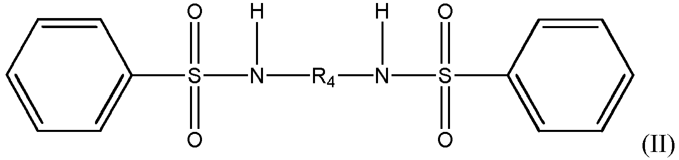 dans laquelle R₄ est un groupe divalent comprenant de 1 à 20 atomes de carbone comprenant éventuellement des hétéroatomes.

10. Composition selon l'une quelconque des revendications 7 à 8, **caractérisée en ce que** les composés de formule (I) sont choisis dans le groupe comprenant : le Benzenesulfonamide, le *N*,*N*-Dimethylbenzenesulfonamide, le *N*-Methylbenzenesulfonamide, le *N*-(Ethyl)benzenesulfonamide, le *N-*(*n-*Butyl)benzenesulfonamide, le *N*-(*n*-Dodecyl)benzenesulfonamide, le *N-*(*-tert-*Dodecyl)benzenesulfonamide, le (*N*-(*n*-Octadecyl)benzenesulfonamide et le *N-*(*n*-Butyl)*N*-(*n*-Dodecyl)benzenesulfonamide.

11. Composition selon la revendication 9, **caractérisée en ce que** les composés de formule (II) sont choisis dans le groupe comprenant : le *N,N'-*éthylène-bis(benzenesulfonamide), le *N*,*N*'-butylène-bis(benzenesulfonamide), le*N*,*N*'-hexylène-bis(benzenesulfonamide), le *N*,*N*'-trimethylhexylène-bis(benzenesulfonamide), le *N*,*N*'-n-octylène-bis(benzenesulfonamide), le*N,N'-*n-decylène-bis(benzenesulfonamide), le *N*,*N*'-n-dodecylène-bis(benzenesulfonamide) et le *N*,*N*'-1,3-xylylène-bis(benzenesulfonamide).

12. Composition selon l'une quelconque des revendications 7 à 11, **caractérisée en ce que** ladite composition comprend au moins :
- de 30 à 90 % en poids de polyamide,
- de 1 à 15 % en poids de résine novolaque,
- de 1 à 5 % en poids de composé de formule (I) ou (II), et
- éventuellement des charges de renfort ou de remplissage, et/ou des agents modificateurs de la résistance aux chocs, et
- éventuellement divers additifs ;
les pourcentages en poids sont exprimés par rapport au poids total de la composition.

13. Utilisation d'une résine novolaque et d'un composé portant au moins une fonction sulfonamide pour améliorer les propriétés barrières aux fluides d'une composition polyamide.

14. Utilisation d'une résine novolaque et d'un composé portant au moins une fonction sulfonamide dans une composition polyamide afin de préparer des articles destinés à contenir ou véhiculer des fluides.

## Patentansprüche

1. Polyamidzusammensetzung, insbesondere mit guten Fluidbarriereeigenschaften, umfassend mindestens eine Polyamidmatrix, ein Novolak-Harz und eine Verbindung, die mindestens eine Sulfonamidfunktion trägt, wobei die Verbindung, die mindestens eine Sulfonamidfunktion trägt, in einem Gehalt von 1 bis 5 Gew.-% bezogen auf das Gesamtgewicht der Zusammensetzung vorhanden ist.

2. Zusammensetzung nach Anspruch 1, **dadurch gekennzeichnet, dass** die Polyamidmatrix mindestens ein Polyamid umfasst, das in der Gruppe ausgewählt ist, umfassend Polyamid 6, Polyamid 66, Polyamid 10, Polyamid 11, Polyamid 12, MXD6, die Gemische und Copolymere auf Basis dieser Polyamide.

3. Zusammensetzung nach Anspruch 1 oder 2, **dadurch gekennzeichnet, dass** die Zusammensetzung 30 bis 95 Gew.-% Polyamid bezogen auf das Gesamtgewicht der Zusammensetzung umfasst.

4. Zusammensetzung nach einem der Ansprüche 1 bis 3, **dadurch gekennzeichnet, dass** das Novolak-Harz ein Kondensationsprodukt des Phenols und Formaldehyds ist.

5. Zusammensetzung nach einem der Ansprüche 1 bis 4, **dadurch gekennzeichnet, dass** die Polyamidzusammensetzung zwischen 0,1 und 20 Gew.-% Novolak-Harz bezogen auf das Gesamtgewicht der Zusammensetzung umfasst.

6. Zusammensetzung nach einem der Ansprüche 1 bis 5, **dadurch gekennzeichnet, dass** die Verbindung, die mindestens eine Sulfonamidfunktion trägt, eine oder zwei Sulfonamidfunktionen umfasst.

7. Zusammensetzung nach einem der Ansprüche 1 bis 6, **dadurch gekennzeichnet, dass** die Verbindung, die eine Sulfonamidfunktion trägt, durch die allgemeine Formel (I) dargestellt ist 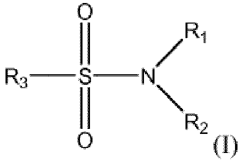 wobei R₁ und R₂ unabhängig voneinander ein Wasserstoffatom oder eine Kohlenwasserstoffkette, umfassend 1 bis 20 Kohlenstoffatome, umfassend eventuell Heteroatome, sind, und R₃ einer Kohlenwasserstoffkette, umfassend 1 bis 20 Kohlenstoffatome, umfassend eventuell Heteroatome, entspricht.

8. Zusammensetzung nach Anspruch 7, **dadurch gekennzeichnet, dass** die Funktionen R₁ und R₂ und R₃ voneinander unabhängig einem Alkyl, linear oder nicht, umfassend 1 bis 20 Kohlenstoffatome, einer zyklischen Gruppe, gesättigt oder nicht, von 3 bis 6 Kohlenstoffatomen, eventuell substituiert, einem Alkylallyl oder einem Allylalkyl entsprechen.

9. Zusammensetzung nach einem der Ansprüche 1 bis 6, **dadurch gekennzeichnet, dass** die Sulfonamid-Verbindung durch die Formel (II) dargestellt ist: 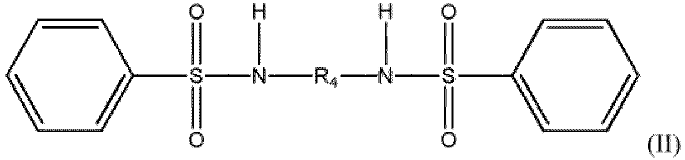 wobei R₄ eine divalente Gruppe ist, umfassend 1 bis 20 Kohlenstoffatome, umfassend eventuell Heteroatome.

10. Zusammensetzung nach einem der Ansprüche 7 bis 8, **dadurch gekennzeichnet, dass** die Verbindungen der Formel (I) in der Gruppe ausgewählt sind, umfassend: Benzolsulfonamid, N,N-Dimethylbenzolsulfonamid, N-Methylbenzolsulfonamid, N-(Ethyl)benzolsulfonamid, N-(n-Butyl)benzolsulfonamid, N-(n-Dodecyl)benzolsulfonamid, N-(-tert-Dodecyl)benzolsulfonamid, N-(n-Octadecyl)benzolsulfonamid und N-(n-Butyl)N-(n-Dodecyl)benzolsulfonamid.

11. Zusammensetzung nach Anspruch 9, **dadurch gekennzeichnet, dass** die Verbindungen der Formel (II) in der Gruppe ausgewählt sind, umfassend: N,N'-Ethylenbis(Benzolsulfonamid), N,N'-Butylenbis(Benzolsulfonamid), N,N'-Hexylenbis(Benzolsulfonamid), N,N'-Trimethylhexylenbis(Benzolsulfonamid), N,N'-n-Octylenbis(Benzolsulfonamid), N,N'-n-Decylenbis(Benzolsulfonamid), N,N'-n-Dodecylenbis(Benzolsulfonamid) und N,N'-1,3-Xylylenbis(Benzolsulfonamid).

12. Zusammensetzung nach einem der Ansprüche 7 bis 11, **dadurch gekennzeichnet, dass** die Zusammensetzung mindestens umfasst:
- 30 bis 90 Gew.-% Polyamid,
- 1 bis 15 Gew.-% Novolak-Harz,
- 1 bis 5 Gew.-% einer Verbindung der Formel (I) oder (II), und
- eventuell Verstärkungs- oder Füllstoffe und/oder Mittel zur Modifizierung der Stoßfestigkeit, und
- eventuell diverse Zusatzstoffe;
wobei die Gewichtsprozentsätze bezogen auf das Gesamtgewicht der Zusammensetzung ausgedrückt sind.

13. Verwendung eines Novolak-Harzes und einer Verbindung, die mindestens eine Sulfonamidfunktion trägt, um die Fluidbarriereeigenschaften einer Polyamidzusammensetzung zu verbessern.

14. Verwendung eines Novolak-Harzes und einer Verbindung, die mindestens eine Sulfonamidfunktion trägt, in einer Polyamidzusammensetzung, um Artikel herzustellen, die dazu bestimmt sind, Fluide zu enthalten oder zu befördern.

## Claims

1. Polyamide composition having in particular good fluid barrier properties, comprising at least one polyamide matrix, one novolac resin and one compound bearing at least one sulfonamide function, said compound bearing at least one sulfonamide function being present in a content ranging from 1 to 5% by weight, relative to the total weight of the composition.

2. Composition according to Claim 1, **characterized in that** the polyamide matrix comprises at least one polyamide selected from the group consisting of the polyamide PA 6, the polyamide PA 66, the polyamide PA 10, the polyamide PA 11, the polyamide PA 12, MXD6, and blends and copolymers based on these polyamides.

3. Composition according to Claim 1 or 2, **characterized in that** the composition comprises from 30 to 95% by weight of polyamide, relative to the total weight of the composition.

4. Composition according to any one of Claims 1 to 3, **characterized in that** the novolac resin is a product of condensation of phenol and formaldehyde.

5. Composition according to any one of Claims 1 to 4, **characterized in that** the polyamide composition comprises between 0.1 and 20% by weight of novolac resin, relative to the total weight of the composition.

6. Composition according to any one of Claims 1 to 5, **characterized in that** the compound bearing at least one sulfonamide function comprises one or two sulfonamide function(s).

7. Composition according to any one of Claims 1 to 6, **characterized in that** the compound bearing a sulfonamide function is represented by general formula (I) 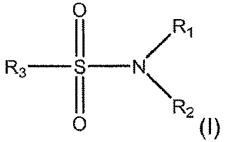 in which R₁ and R₂ are, independently of one another, a hydrogen atom or a hydrocarbon-based chain containing from 1 to 20 carbon atoms optionally comprising heteroatoms, and R₃ corresponding to a hydrocarbon-based chain containing from 1 to 20 carbon atoms optionally comprising heteroatoms.

8. Composition according to Claim 7, **characterized in that** the R₁ and R₂ and R₃ functions, independently of one another, correspond to a linear or nonlinear alkyl containing from 1 to 20 carbon atoms, a saturated or unsaturated cyclic group containing from 3 to 6 carbon atoms, which is optionally substituted, an alkylallyl or an allylalkyl.

9. Composition according to any one of Claims 1 to 6, **characterized in that** the sulfonamide compound is represented by formula (II): 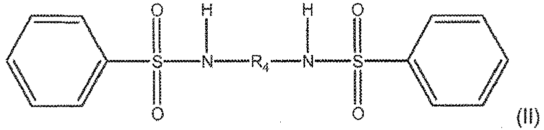 in which R₄ is a divalent group containing from 1 to 20 carbon atoms optionally comprising heteroatoms.

10. Composition according to either one of Claims 7 and 8, **characterized in that** the compounds of formula (I) are selected from the group consisting of: benzenesulfonamide, N,N-dimethylbenzenesulfonamide, N-methylbenzenesulfonamide, N-(ethyl)benzenesulfonamide, *N*-(*n*-butyl)benzenesulfonamide, *N-*(*n-*dodecyl)benzenesulfonamide, N-(tert-dodecyl)-benzenesulfonamide, N-(*n*-octadecyl)benzenesulfonamide and N-(*n*-butyl)-N-(*n*-dodecyl)benzenesulfonamide.

11. Composition according to Claim 9, **characterized in that** the compounds of formula (II) are selected from the group consisting of: *N,N'-*ethylenebis(benzenesulfonamide), *N,N'-*butylenebis(benzenesulfonamide), *N,N'-*hexylenebis(benzenesulfonamide), *N,N'-*trimethylhexylenebis(benzenesulfonamide), *N,N'*-(n-octylene)bis(benzenesulfonamide), *N,N'-*(n-decylene)bis(benzenesulfonamide), *N,N'*-(n-dodecylene)bis(benzenesulfonamide) and *N,N'*-(1, 3-xylylene)bis(benzenesulfonamide).

12. Composition according to any one of Claims 7 to 11, **characterized in that** said composition comprises at least:
- from 30 to 90% by weight of polyamide,
- from 1 to 15% by weight of novolac resin,
- from 1 to 5% by weight of compound of formula (I) or (II), and
- optionally, reinforcing or bulking fillers, and/or impact modifiers, and
- optionally, various additives;
the percentages by weight are expressed relative to the total weight of the composition.

13. Use of a novolac resin and of a compound bearing at least one sulfonamide function, for improving fluid barrier properties of a polyamide composition.

14. Use of a novolac resin and of a compound bearing at least one sulfonamide function in a polyamide composition in order to prepare articles intended to contain or to convey fluids.
